# EUROPEAN PATENT APPLICATION

(11) **EP 4 738 546 A1**
(43) Date of publication of application: **06.05.2026**
(21) Application number: 24849594.7
(22) Date of filing: 30.07.2024
(51) Int. Cl.: H01M 10/6572, H01M 10/617, H01M 10/63, H01M 10/6551, H01M 10/6556, H01M 50/204

(54) **THERMAL MANAGEMENT SYSTEM**

(30) Priority: 03.08.2023 KR 20230101857
(71) Applicant: LG Energy Solution, Ltd., Seoul 07335 (KR)
(72) Inventor: JEONG, Doo Ho, Daejeon 34122 (KR)
(74) Representative: Plasseraud IP
(86) International application number: PCT/KR2024/011193
(87) International publication number: WO 2025/029027

(57) **Abstract**

A thermal management system according to an embodiment of the present invention includes a battery pack in which batteries are built, a circuit part mounted on the battery pack and configured to perform a control on the battery pack, and a thermoelectric element electrically connected to the circuit part and configured to perform cooling and heating for the battery pack between the battery pack and the circuit part.

## Description

### TECHNICAL FIELD

### CROSS-REFERENCE TO RELATED APPLICATION

The present application claims the benefit of the priority of Korean Patent Application No. 10-2023-0101857, filed on August 3, 2023, which is hereby incorporated by reference in its entirety.

### TECHNICAL FIELD

The present invention relates to a thermal management system.

### BACKGROUND ART

Research and development on power generation based on Eco-friendly energy sources are being conducted to solve the problem of environmental pollution and energy source problems caused by the depletion of the petroleum resources. Particularly, research on secondary batteries is actively conducted, and research is being conducted on various aspects of secondary batteries, such as materials, structures, processes, and stability.

A plurality of secondary batteries may be installed and managed into a module or pack unit and undergo repeated charging and discharging processes. It is necessary to appropriately control heat generation in a module or pack during the charging and discharging process to ensure stability.

According to the related art, cooling has been performed using a fan, cooling water, or a natural cooling manner. In this case, a separate structure has to be installed, and there is a problem of difficulty in performing adaptively and rapidly cooling and heating.

### DISCLOSURE OF THE INVENTION

### TECHNICAL PROBLEM

An object of the present invention for solving the above problems is to provide a thermal management system that is capable of performing adaptively and quickly performing cooling and heating.

### TECHNICAL SOLUTION

A thermal management system according to an embodiment of the present invention includes a battery pack in which batteries are built, a circuit part mounted on the battery pack and configured to perform a control on the battery pack, and a thermoelectric element electrically connected to the circuit part and configured to perform cooling and heating for the battery pack between the battery pack and the circuit part.

### ADVANTAGEOUS EFFECTS

According to the preferred embodiment of the present invention, adaptive and rapid cooling and heating may be performed.

According to the preferred embodiment of the present invention, the battery pack may operate within the optimal temperature range to improving the durability and stability.

### BRIEF DESCRIPTION OF THE DRAWINGS

FIG. 1 is a conceptual view of a thermal management system according to an embodiment of the present invention.
FIG. 2 is a conceptual view of a thermal management system according to another embodiment of the present invention.
FIG. 3 is a conceptual view of a thermal management system according to further another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

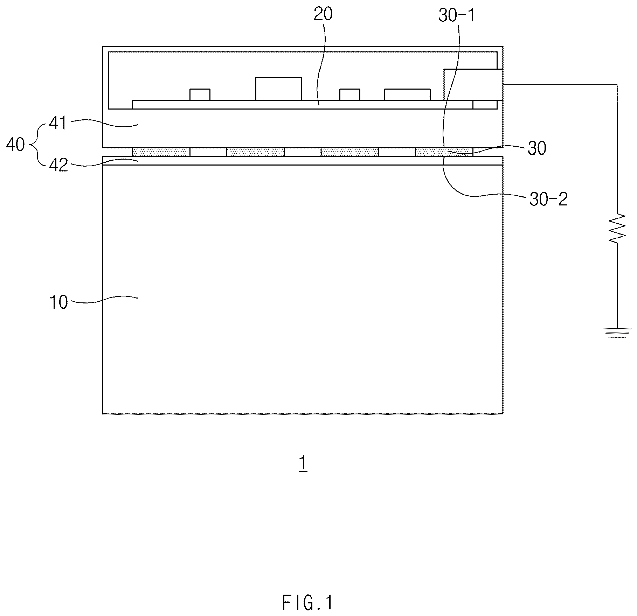

FIG. 1 is a conceptual view of a thermal management system according to an embodiment of the present invention.

A thermal management system 1 may include a battery pack 10.

The battery pack 10 may have built-in batteries.

The thermal management system 1 may include a circuit part 20.

The circuit part 20 may be mounted on the battery pack 10. The circuit part 20 may be configured to perform a control for the battery pack 10. For example, the circuit part 20 may perform a management control for the battery pack 10 and also perform a control for the cooling and heating of the battery pack 10.

The thermal management system 1 may include a thermoelectric element 30.

The thermoelectric element 30 may be electrically connected to the circuit part 20. The thermoelectric device 30 may perform the cooling and heating for the battery pack 10 between the battery pack 10 and the circuit part 20. The thermoelectric element 30 may be a Peltier element.

The thermal management system 1 may include a heatsink 40.

The heatsink 40 may be connected to the thermoelectric element 30 between the battery pack 10 and the circuit part 20. For example, the heatsink 40 may include a first heatsink 41 and a second heatsink 42. The first heatsink 41 may be disposed between the circuit part 20 and the thermoelectric element 30. The second heatsink 42 may be disposed between the thermoelectric element 30 and the battery pack 10.

The thermoelectric element 30 may be in contact with the heatsink 40. For example, a top surface 30-1 of the thermoelectric element 30 may be in contact with a bottom surface of the first heatsink 41. A bottom surface 30-2 of the thermoelectric element 30 may be in contact with a top surface of the second heatsink 42.

The first heatsink 41 may cool the circuit 20 through heat absorption when heat is generated in the circuit 20. For example, when the heat is generated in the circuit part 20, the first heatsink 41 that is in contact with the circuit part 20 may receive the heat to cool the circuit part 20.

The thermoelectric generator 30 may cool or heat the battery pack 10. For example, the circuit part 20 may selectively supply current in different directions to the thermoelectric element 30 to cool or heat the battery pack 10. A second control described below may be a control in which a direction of the current flowing through the thermoelectric element 30 is opposite to that of the first control.

The thermoelectric generator 30 may cool the battery pack 10 through the second heatsink 42 according to the first control of the circuit part 20. For example, the circuit part 20 may supply current in a predetermined direction to the thermoelectric element 30 according to the first control, and according to the first control, a temperature of the top surface 30-1 of the thermoelectric element 30 may increase, and a temperature of the bottom surface 30-2 may decrease. In this case, the battery pack 10 may be cooled through the second heatsink 42 that is in contact with the bottom surface 30-2 of the thermoelectric element 30. In this manner, the battery may be cooled when the cooling of the battery is needed during the charging and discharging.

The thermoelectric element 30 may heat the battery pack 10 through the second heatsink 42 according to the second control of the circuit part 20. For example, the circuit part 20 may supply current in a direction opposite to the predetermined direction to the thermoelectric element 30 according to the second control, and according to the second control, a temperature of the top surface 30-1 of the thermoelectric element 30 may decrease, and a temperature of the bottom surface 30-2 may increase. In this case, the battery pack 10 may be heated through the second heatsink 42 that is in contact with the bottom surface 30-2 of the thermoelectric element 30. In this manner, the battery may be heated when battery pre-heating is required in low temperature environments.

As described above, when performing the temperature control on the battery pack 10 using the thermoelectric element 30, the cooling and heating on the battery pack 10 may be performed adaptively and quickly. Thus, the battery pack may operate within an optimal temperature range to improve durability and stability.

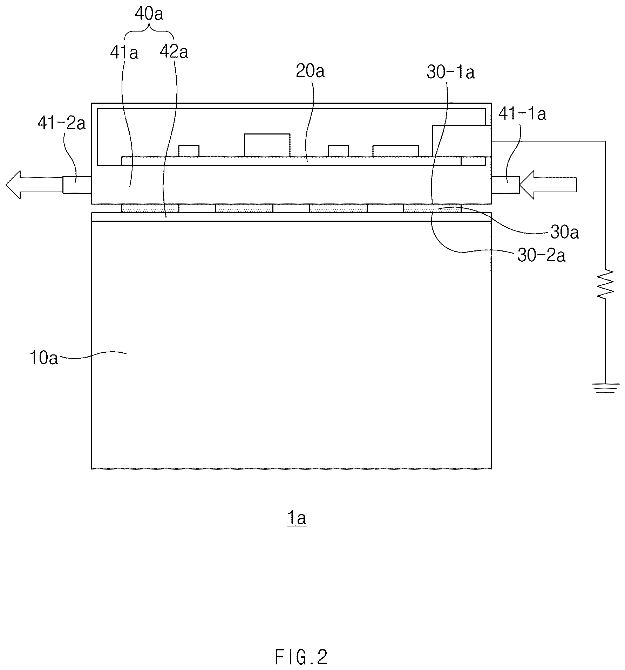

FIG. 2 is a conceptual view of a thermal management system according to another embodiment of the present invention. The descriptions of the above-described embodiments may be applied identically or similarly to this embodiment.

A thermal management system 1a may include a first heatsink 41a provided to allow a refrigerant to flow.

The first heatsink 41a may include an inlet 41-1a. The refrigerant may be introduced through the inlet 41-1a.

The first heatsink 41a may include an outlet 41-2a. The refrigerant may be discharged through the outlet 41-2a.

The circuit part 20a may control a temperature of the first heatsink 41a. For example, the circuit part 20a may allow the refrigerant to flow to the first heatsink 41a when the temperature of the first heatsink 41a is higher than a predetermined temperature.

For example, when the temperature of the first heatsink 41a increases due to heat generation of the circuit part 20a and/or a temperature of a top surface 30-1a of a thermoelectric element 30 increases according to a first control so that the temperature of the first heatsink 41a exceeds a threshold value, the circuit part 20a may cool the first heatsink 41a by allowing the refrigerant to flow through the first heatsink 41a.

However, this embodiment is not limited thereto, the flow of the refrigerant may be controlled through a separate control device.

The circuit part 20a may stop the control on the thermoelectric element 30 when the temperature of the first heatsink 41a is equal to or greater than a predetermined temperature. For example, when the temperature of the first heatsink 41a of the thermoelectric element 30a exceeds the threshold value, the circuit part 20a may stop the control of the thermoelectric element 30a according to the first control to prevent the temperature of the top surface 30-1a of the thermoelectric element 30a from increasing and the temperature of the first heatsink 41a from continuously increasing.

As described above, when performing the temperature control on the first heatsink 41a, the cooling and heating for the first heatsink 41a may be performed adaptively and quickly. Thus, the heatsink may operate within an optimal temperature range to improve durability and stability.

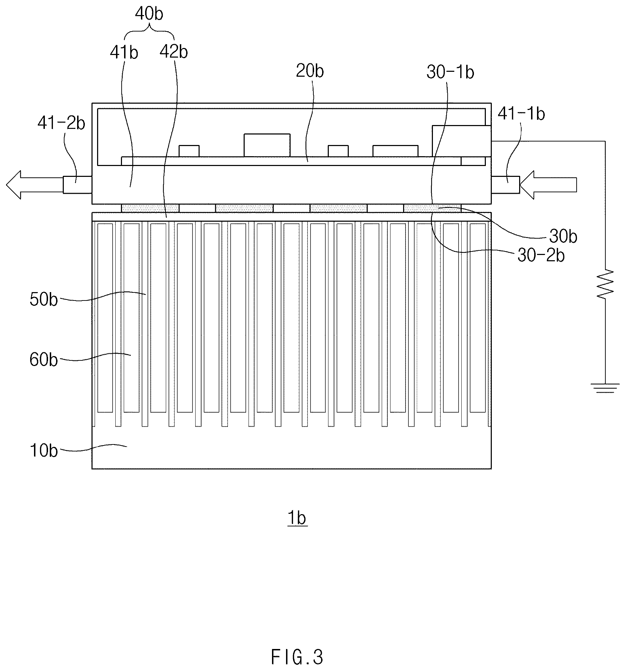

FIG. 3 is a conceptual view of a thermal management system according to further another embodiment of the present invention. The descriptions of the above-described embodiments may be applied identically or similarly to this embodiment.

A thermal management system 1b may include a thermal conductive member 50b.

The thermal conductive member 50b may cool and heat batteries 60b. For example, the thermal conductive member 50b may be provided to extend from a second heatsink 42b to a space between the batteries 60b inside the battery pack 10b. In other words, the thermal conductive member 50b may be provided to extend between the batteries 60b while being connected to the second heatsink 42b.

When the second heatsink 42b is cooled by a thermoelectric element 30b, the batteries 60b may also be cooled through the thermal conductive member 50b. When the second heatsink 42b is heated by the thermoelectric element 30b, the batteries 60b may also be heated through the thermal conductive member 50b.

The thermal conductive member 50b may be provided to be integrated with the second heatsink 42b. For example, each of the thermal conductive member 50b and the second heatsink 42b may be made of a material having high thermal conductivity or the same or similar material as the heatsink and may be provided integrally to extend between the batteries 60b.

As described above, when the thermal management system 1b includes the thermal conductive member 50b, the cooling and heating of the batteries inside the battery pack may be performed adaptively and quickly. Thus, not only the battery pack but also the batteries may operate within an optimal temperature range to improve durability and stability.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1, 1a, 1b: Thermal management system
10, 10a, 10b: Battery pack
20, 20a, 20b: Circuit part
30, 30a, 30b: Thermoelectric element
30-1, 30-1a, 30-2b: Top surface
30-2, 30-2a, 30-2b: Bottom surface
40, 40a, 40b: Heatsink
41, 41a, 41b: First heatsink
41-1a, 41-1b: Inlet
41-2a, 41-2b: Outlet
42, 42a, 42b: Second heatsink
50B: Thermal conductive member
60b: Batteries

## Claims

1. A thermal management system comprising:
a battery pack in which batteries are built;
a circuit part mounted on the battery pack and configured to perform a control on the battery pack; and
a thermoelectric element electrically connected to the circuit part and configured to perform cooling and heating for the battery pack between the battery pack and the circuit part.

2. The thermal management system of claim 1, wherein the thermoelectric element is a Peltier element.

3. The thermal management system of claim 1, further comprising a heatsink connected to the thermoelectric element between the circuit part and the battery pack.

4. The thermal management system of claim 3, wherein the heatsink comprises:
a first heatsink disposed between the circuit part and the thermoelectric element; and
a second heatsink disposed between the thermoelectric element and the battery pack.

5. The thermal management system of claim 4, wherein the thermoelectric element has one surface that is in contact with a bottom surface of the first heatsink and the other surface that is in contact with a top surface of the second heatsink.

6. The thermal management system of claim 4, wherein the thermoelectric element is configured to cool the battery pack through the second heatsink according to a first control of the circuit part.

7. The thermal management system of claim 6, wherein the thermoelectric element is configured to heat the battery pack through the second heatsink according to a second control of the circuit part,
wherein the second control has a current direction opposite to that of the first control.

8. The thermal management system of claim 4, wherein the first heatsink is provided to allow a refrigerant to flow.

9. The thermal management system of claim 8, wherein the first heatsink comprises:
an inlet through which the refrigerant is introduced;
and
an outlet through which the refrigerant is discharged.

10. The thermal management system of claim 8, wherein the circuit part is configured to allow the refrigerant to flow to the first heatsink when a temperature of the first heatsink is equal to or greater than a predetermined temperature.

11. The thermal management system of claim 8, wherein the circuit part is configured to stop the control on the thermoelectric element when a temperature of the first heatsink is equal to or greater than a predetermined temperature.

12. The thermal management system of claim 4, further comprising a thermal conductive member which extends from the second heatsink to a space between the batteries inside the battery pack to cool and heat the batteries.

13. The thermal management system of claim 12, wherein the second heatsink and the thermal conductive member are integrated with each other.
